# EUROPÄISCHE PATENTANMELDUNG

(11) **EP 1 295 525 A2**
(43) Veröffentlichungstag der Anmeldung: **26.03.2003**
(21) Anmeldenummer: 02450207.2
(22) Anmeldetag: 18.09.2002
(51) Int. Cl.: A01G 9/22

(54) **Abschattungs- und/oder Isolierbahn, sowie Verfahren zur Herstellung und deren Verwendung**

(30) Priorität: 19.09.2001 AT 14912001
(71) Anmelder: Felix Heescher GMBH, D-48477 Hörstel-Bevergern (DE); Lenzing Plastics GmbH & CoKG, 4860 Lenzing (AT)
(72) Erfinder: Haitchi, Michael, 4860 Lenzig (AT); Heescher, Felix, 48477 Hörstel-bevergern (DE)
(74) Vertreter: Kopecky, Helmut, Dipl.-Ing.

(57) **Zusammenfassung**

Die Erfindung betrifft eine Abschattungs- und/oder Isolierbahn bestehend aus zwei Gewebebahnen (2,3) und ist dadurch gekennzeichnet, daß die Gewebebahnen (2,3) unter Bildung von voneinander getrennten Kammern (4) mit einer Oberseite und einer Unterseite direkt miteinander verbunden sind, wobei die Fläche der die Unterseite der Kammer bildenden Bahn (3) gleich oder größer ist als die Fläche der die Oberseite der Kammer (4) bildenden Bahn (2). Dadurch wird eine Abschattungs- und/oder Isolierbahn zur Verfügung zu stellen, welche auf einfache und günstige Weise hergestellt, gute Abschattungs- und/oder Isoliereigenschaften und auch gute Handhabungseigenschaften aufweist. Die Erfindung betrifft ferner Verfahren zur Herstellung und deren Verwendung.

## Beschreibung

Die Erfindung betrifft eine Abschattungs- und/oder Isolierbahn aus zwei Gewebebahnen. Die Erfindung betrifft ferner Verfahren zur Herstellung und deren Verwendung.

Zur Isolierung z. B. von Gewächshäusern gegen Wärmeverlust und zur Abschattung gegen zu starke Lichteinstrahlung können Folien und Gewebe eingesetzt werden. Einfache Folien und Gewebe weisen Nachteile auf, die durch mehrlagige- bzw. mehrschichtige Konstruktionen beseitigt werden sollen. Bei mehrlagigen Konstruktionen kann eine dazwischen eingeschlossene Luftschicht eine zusätzliche Isolierung bewirken.

Aus der WO 81/00126 ist ein Dachelement aus einer schlauchförmigen Kunststofffolie bekannt, wobei der Abstand der Folien und damit die darin eingeschlossene isolierende Luftschicht verändert werden kann. Die Konstruktion ist sehr aufwendig und durch die Verwendung von dichten Folien kann es zu Problemen mit Kondenswasserbildung kommen.

Zu Isolationszwecken sind auch Noppenfolien bekannt. Der Nachteil von Noppenfolien ist, neben der Dichtigkeit, der große Platzbedarf in Ruhelage, wenn die Folie zurückgezogen, aufgerollt bzw. gefaltet wird.

Aus der EP-A 0 029 173 ist ein Gewächshausvorhang bekannt, wobei zwei Gewebe durch Fäden voneinander getrennt sind, die zwischen sich eine Luftschicht einschließen. Abgesehen von fertigungstechnischen Problemen bei der Herstellung dieses Produktes, kann dieses Produkt weitere Nachteile aufweisen. Wenn die beiden Bahnen, entsprechend einer Ausführungsform dieser Erfindung, nur punktuell mit Fäden miteinander verbunden sind, kommt es aufgrund des großen Luftvolumens durch die natürliche thermische Bewegung der Luft zu einer Luftströmung in dem großen Hohlraum, die den Wärmeisoliereffekt verringert. Auch eine weitere Ausführungsform wie in Fig. 5 gezeigt, bei der die Bahnen durch beabstandete dichte Fadenreihen miteinander verbunden sind, kann diesen Nachteil nicht beseitigen. Außerdem ist bei einem zu geringen Abstand der Fadenreihen der Gewächshausvorhang im aufgerollten bzw. gefalteten Zustand sehr voluminös, bei einem zu weitem Abstand können die Bahnen in sich zusammenfallen und somit können die isolierenden Luftschichten verschwinden.

Die Erfindung stellt sich die Aufgabe diese Nachteile zu vermeiden und eine Abschattungsund/oder Isolierbahn zur Verfügung zu stellen, welche auf einfache und günstige Weise hergestellt, gute Abschattungs- und/oder Isoliereigenschaften und auch gute Handhabungseigenschaften aufweist.

Die erfindungsgemäße Abschattungs- und/oder Isolierbahn bestehend aus zwei Gewebebahnen ist dadurch gekennzeichnet, daß die Gewebebahnen unter Bildung von voneinander getrennten Kammern mit einer Oberseite und einer Unterseite direkt miteinander verbunden sind, wobei die Fläche der die Unterseite der Kammer bildenden Bahn gleich oder größer ist als die Fläche der die Oberseite der Kammer bildenden Bahn.

Bei einer, im wesentlichen waagrechten, Aufspannung der Abschattungs- und/oder Isolierbahn entsteht, bedingt durch die größeren Flächen der Unterseiten der Kammern, ein Durchhang dieser Unterseiten und dadurch bildet sich eine Luftschicht mit einer zusätzlichen Isolierwirkung. Auch bei der Verwendung als seitlicher Vorhang, d. h. in einer in etwa senkrechter Aufspannung, bildet sich eine gewisse Luftschicht. Auch wenn die Flächen der genannten Ober- und Unterseiten gleich sind, ist noch eine zusätzliche Isolierwirkung gegeben.

Die Gewebebahnen können aus textilem Gewebe oder Bändchengewebe oder aus einer Kombination von einem textilem Gewebe mit einem Bändchengewebe gewählt werden.

Durch die Verwendung von Gewebebahnen kann die Bildung der Kammern durch direkte Webbindungen erfolgen, wobei die Kammern durch die Webbindungen voneinander getrennt sind.

Die Webbindung kann durch Bindekette und/oder Bindeschuß hergestellt werden, z. B. derart, daß separate Schußfäden und separate Kettfäden in bestimmten Abständen durch die übereinanderliegenden Gewebebahnen geführt werden und derart unter Bildung von Kammern die Gewebebahnen verbinden.

Die Webbindung kann, insbesondere bei Bändchengeweben, auch durch Bändchen, insbesondere Folienbändchen, erfolgen. Zur Erhöhung der Festigkeit oder besseren Bindung können auch mehrere Fäden oder Bändchen zur Bildung einer Webbindung gleichzeitig verwendet werden.

Die Webbindung kann auch dadurch gebildet werden, daß ein oder mehrere Fäden oder Bändchen einer Gewebebahn der zweiten Gewebebahn, gemeinsam angehören.

Je nach Anforderung und Beschaffenheit der verwendeten Gewebebahnen kann die direkte Verbindung auch durch Vernähen, Verkleben oder Verschweißen erfolgen.

Die Isolierwirkung der Luftschicht in den Kammern ist am größten, wenn diese Luftschicht ruht und nicht durch Konvektion oder durch andere Einflüsse von außen, z. B. Wind, ständig in Bewegung ist oder die Luft sogar ausgetauscht wird. Die Stabilität der Luftschicht wird durch die Grundfläche der Kammern, sowie durch die Höhe der Kammern beeinflußt.

Die Grundfläche der Kammern wird durch die Abstände der Webbindungen bestimmt. Die Höhe der Kammern wird durch den Durchhang der unteren Bahn bestimmt. Dieser Durchhang kommt durch die Differenz der Flächen der die Unterseite der Kammern zu den Flächen der die Oberseite der Kammern bildenden Bahn zustande, wobei die Unterseite die größere Fläche aufweist.

Die Grundfläche der Kammern, sowie deren Höhe, hängen vom jeweiligen Einsatzzweck und Material ab und können vom Fachmann durch Versuche diesen angepaßt werden.

In einer bevorzugten Ausführungsform ist die erfindungsgemäße Abschattungs- und/oder Isolierbahn dadurch gekennzeichnet, daß die Differenz der Flächen der die Unterseite der Kammern bildenden Bahn bis zu 10 %, vorzugsweise um 1 %, größer ist als die Fläche der die Oberseite der Kammern bildenden Bahn.

Die erfindungsgemäße Abschattungs- und/oder Isolierbahn weist im aufgerollten bzw. gefalteten Zustand nur ein kleines Packmaß auf.

Als Materialien für die erfindungsgemäße Abschattungs- und/oder Isolierbahn können Gewebebahnen mit verdunkelnden, schattierenden und isolierenden Eigenschaften verwendet werden, wobei zumindest eine der Gewebebahnen eine dieser Eigenschaften aufweist.

Ebenso können die Gewebebahnen der Abschattungs- und/oder Isolierbahn beliebig aus Gewebebahnen mit Verdunkelungs-, Schattier- oder Isoliereigenschaften gewählt sein.

Folgende Bändchen können eingesetzt werden:
Kunststoffbändchen (im folgenden KS-Bändchen genannt ) transparent bzw. diffus, KS-Bändchen farbig, vorzugsweise schwarz, weiß, silber, grau,
Bändchen aus Aluminium-Verbunden (Al-Verbund) beidseitig glänzend, oder einseitig glänzend und die zweite Seite eingefärbt,
Bändchen aus Verbunden mit metallisierten Kunststofffolien beidseitig glänzend, oder einseitig glänzend und die zweite Seite eingefärbt, z. B aus Polyester (met.PET-Verbund).

Alle oben angeführten Bändchenarten können entweder alleine als auch in unterschiedlichen Kombinationen untereinander und auch in Verbindung mit textilen Fäden eingesetzt werden, wie zum Beispiel:
Kette und Schuß: 100 % KS-Bändchen schwarz (auch mit schwarzen Textilfäden);
Kette und Schuß: 100 % KS-Bändchen transparent (auch mit Textilfaden natur);
Kette und Schuß: 100 % KS-Bändchen weiß (auch mit Textilfaden weiß);
Kette: 1 x KS-Bändchen diffus + 1 x Al-Verbund, Schuß: 1 x KS-Bändchen transparent + 1 x Textilfaden natur;
Kette: 1 x KS-Bändchen diffus + 1 x met.PET-Verbund, Schuß: 1 x KS-Bändchen transp. + 1 x Textilfaden natur;
Kette: 1 x KS-Bändchen diffus + 2 x Al-Verbund, Schuß: 1 x KS-Bändchen transparent + 1 x Textilfaden natur;
Kette: 1 x KS-Bändchen diffus + 2 x met. PET-Verbund, Schuß: 1 x KS-Bändchen transp. + 1 x Textilfaden natur;
Kette: 2 x KS-Bändchen diffus + 1 x Al-Verbund, Schuß: 100 % KS-Bändchen transparent;
Kette: 2 x KS-Bändchen diffus + 1 x met.PET-Verbund, Schuß: 100 % KS-Bändchen transparent;
Kette: 100 % Bändchen aus Al-Verbund, Schuß: 1 x KS-Bändchen transparent + 1 x Textilfaden natur;
Kette: 100 % Bändchen aus met.PET-Verbund, Schuß: 100 % KS-Bändchen transparent;
Kette: 100 % Bändchen aus Al-Verbund schwarz (auch mit Textilfaden schwarz), Schuß: 100 % KS-Bändchen transp.
Kette: 100 % Bändchen aus met.PET-Verbund schwarz, Schuß: 1 x KS-Bändchen transp. + 1 x Textilfaden natur

Die o. a. Beispiele haben nur exemplarischen Charakter. Je nach Einsatzzweck sind alle möglichen Variationen und auch Farbgebungen machbar.

In Gewächshäusern wird üblicherweise eine Temperatur von etwa 20 °C gehalten, oberhalb einer einfachen Isolierbahn ist nur eine Temperatur von etwa 13 °C vorhanden, wodurch an der Unterseite Kondenswasserbildung eintritt, was zur Tropfenbildung und somit zu Pflanzenschäden führen kann.

Bei Verwendung von dichten Folien, z. B. Polyethylenfolien, kann z. B. durch Undichtigkeiten im Gewächshausdach Tropfwasser von oben eindringen, welches auf die Folie fällt und auf der Folie, Wassersäcke bildet. Durch diese Wassersäcke können Schäden entstehen und den Betrieb von automatischen Anlagen behindern.

Eine weitere Ausführungsform der Abschattungs- und/oder Isolierbahn kann diese Nachteile vermeiden und ist dadurch gekennzeichnet, daß die Gewebebahnen zumindest teilweise wasserdurchlässig, wasserdampfdurchlässig und/oder leicht luftdurchlässig sind.

Durch den Einsatz von teilweise wasserdurchlässigen, wasserdampfdurchlässigen und/oder leicht luftdurchlässigen Geweben wird möglich, daß einerseits-Kondenswasser durchsickern kann und andererseits überhöhte Luftfeuchtigkeit im unteren Bereich des Raumes langsam nach oben entlüftet werden kann.

Eine Luftschicht mit einer mittleren Stärke von ca. 10 mm hat sich als geeignet für eine gute Isolierung erwiesen. Als leicht luftdurchlässig werden Gewebe mit einem Luftdurchlass von ca. 300 Liter/min bezeichnet, bezogen auf einem Luftunterdruck von 200 Pa (Luftdurchlässigkeitsprüfung nach DIN 53887).

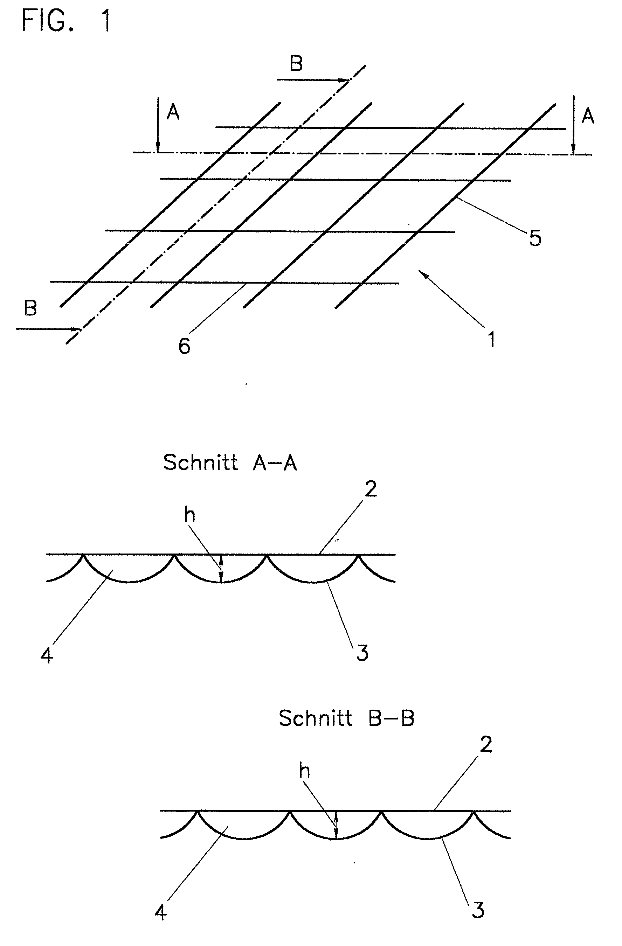

Fig. 1 zeigt einen Ausschnitt einer erfindungsgemäßen Abschattungs- und oder Isolierbahn (1) im aufgespannten Zustand, sowie einen Schnitt AA in Querrichtung und einen Schnitt BB in Längsrichtung. Die Gewebebahnen (2, 3) sind in Längs- und Querrichtung direkt miteinander verbunden. Im aufgespannten Zustand bilden sich zwischen den Gewebebahnen Kammern (4), deren Größe durch den Abstand der Verbindungen (5,6) gegeben ist. Die Höhe der Kammern h kommt durch die Differenz der Flächen der die Unterseite der Kammern bildenden Bahn (3) zu den Flächen der die Oberseite der Kammern bildenden Bahn (2) zustande, wobei die Unterseite die größere Fläche aufweist.

Die Erfindung betrifft ferner Verfahren zur Herstellung einer Abschattungs- und/oder Isolierbahn.

Die Herstellung der Abschattungs- und/oder Isolierbahn kann auf herkömmlichen Webmaschinen ohne wesentliche Zusatzinvestitionen kostengünstig und auf einfache Weise hergestellt werden.

Das Verfahren zur Herstellung einer Abschattungs- und/oder Isolierbahn aus zwei Gewebebahnen ist dadurch gekennzeichnet, daß eine erste Gewebebahn in vordefinierten Abständen in Querrichtung mit einem oder mehreren Schußfäden bzw. Schußbändchen und/oder in Längsrichtung mit einem oder mehreren Kettfäden bzw. Kettbändchen in vordefinierten Abständen mit einer zweiten Gewebebahn direkt verbunden wird, so daß zwischen den Verbindungslinien Kammern gebildet werden.

In einer Ausführungsform werden zwei Gewebebahnen in einem separaten Schritt durch Kettfäden bzw. Kettbändchen und/oder Schußfäden bzw. Schußbändchen verbunden werden.

Eine weitere Ausführungsform ist dadurch gekennzeichnet, daß zwei Gewebebahnen gleichzeitig gebildet werden und ein oder mehrere Kettfäden bzw. -bändchen und/oder ein oder mehrere Schußfäden bzw. -bändchen in vordefinierten Abständen den zwei Gewebebahnen gemeinsam eingewoben werden.

Die erste und zweite Gewebebahn können zusätzlich an den Seitenrändern mittels Webkanten verbunden werden.

Zur Bildung eines Durchhanges der zweiten Bahn sind folgende Möglichkeiten gegeben:

Die Fläche der zweiten Gewebebahn wird von vornherein größer gewählt als die Fläche der ersten Gewebebahn.

Mit Hilfe von zwei getrennten Abwickelstationen der Kette, wobei eine Abwickelvorrichtung in jedem Kammerabstand einen Tänzer und eine Hebeschiene erhält, wird zusätzliches Material für die zweite, die Unterseiten der Kammern bildende, Gewebebahn zur Verfügung gestellt, welches Material den Durchhang in jeder Kammer bildet.

Zur Bildung der zweiten Gewebebahn wird eine höhere Schußdichte und/oder eine höhere Kettdichte als zur Bildung der ersten Gewebebahn eingesetzt.

Zur Bildung der zweiten Gewebebahn werden breitere Schußfäden bzw. -bändchen und/oder breitere Kettfäden bzw.- bändchen als zur Bildung der ersten Gewebebahn eingesetzt.

Die zwei Gewebebahnen werden aus einem Material mit unterschiedlichem Wärmeschrumpf gewählt, wobei nach Bildung der Verbindungen, eine Seite mittels Wärme geschrumpft wird.

Die erfindungsgemäße Abschattungs- und/oder Isolierbahn ist besonders geeignet zur Verwendung in Gewächshäusern, als auch für Freilandbeete und Feldern.

Die Abschattungs- und/oder Isolierbahn kann dabei auf Seile, welche in einem Abstand gespannt sind, daß die Verbindungen der Kammern in Querrichtung auf diesen Seilen aufliegen, gelegt werden, wobei die den Durchhang bildende Seite nach unten gerichtet wird.

An den Verbindungen der Kammern können auch Haken angebracht werden, mittels derer die Abschattungs- und/oder Isolierbahn auf die Seile aufgebracht wird.

Die Abschattungs- und/oder Isolierbahn kann auch mit Systemen eingesetzt werden, die eine automatische Aufspannung ermöglichen.

## Patentansprüche

1. Abschattungs- und/oder Isolierbahn bestehend aus zwei Gewebebahnen (2, 3) **dadurch gekennzeichnet, daß** die Gewebebahnen (2, 3) unter Bildung von voneinander getrennten Kammern (4) mit einer Oberseite und einer Unterseite direkt miteinander verbunden sind, wobei die Fläche der die Unterseite der Kammer (4) bildenden Bahn (3) gleich oder größer ist als die Fläche der die Oberseite der Kammer (4) bildenden Bahn (2).

2. Abschattungs- und/oder Isolierbahn nach Anspruch 1, **dadurch gekennzeichnet, daß** die Gewebebahnen (2, 3) aus textilen Gewebe oder Bändchengewebe oder aus einer Kombination eines textilen Gewebes mit einem Bändchengewebe gewählt sind.

3. Abschattungs- und/oder Isolierbahn nach einem der vorhergehenden Ansprüche, **dadurch gekennzeichnet, daß** die Kammern (4) durch Webbindungen voneinander getrennt sind.

4. Abschattungs- und/oder Isolierbahn nach einem der vorhergehenden Ansprüche, **dadurch gekennzeichnet, daß** die Differenz der Flächen der die Unterseite der Kammern (4) bildenden Bahn (3) bis zu 10 %, vorzugsweise um 1 %, größer ist als die Fläche der die Oberseite der Kammern (4) bildenden Bahn (2).

5. Abschattungs- und/oder Isolierbahn nach einem der vorhergehenden Ansprüche, **dadurch gekennzeichnet, daß** zumindest eine der Gewebebahnen (2, 3) Verdunkelungseigenschaften aufweist.

6. Abschattungs- und/oder Isolierbahn nach einem der vorhergehenden Ansprüche, **dadurch gekennzeichnet, daß** zumindest eine der Gewebebahnen (2, 3) Schattiereigenschaften aufweist.

7. Abschattungs- und/oder Isolierbahn nach einem der vorhergehenden Ansprüche, **dadurch gekennzeichnet, daß** zumindest eine der Gewebebahnen (2, 3) Isoliereigenschaften aufweist.

8. Abschattungs- und/oder Isolierbahn nach einem der vorhergehenden Ansprüche, **dadurch gekennzeichnet, daß** die Gewebebahnen (2, 3) beliebig aus Gewebebahnen (2, 3) mit Verdunkelungs-, Schattier- oder Isoliereigenschaften gewählt sind.

9. Abschattungs- und/oder Isolierbahn nach einem der vorhergehenden Ansprüche, **dadurch gekennzeichnet, daß** die Gewebebahnen (2, 3) zumindest teilweise wasserdurchlässig, wasserdampfdurchlässig und/oder leicht luftdurchlässig sind.

10. Verfahren zur Herstellung einer Abschattungs- und/oder Isolierbahn aus zwei Gewebebahnen (2, 3) in einem Arbeitsschritt, **dadurch gekennzeichnet, daß** eine erste Gewebebahn (2) in vordefinierten Abständen in Querrichtung mit einem oder mehreren Schußfäden bzw. Schußbändchen und/oder in Längsrichtung mit einem oder mehreren Kettfäden bzw. Kettbändchen in vordefinierten Abständen mit einer zweiten Gewebebahn (3) direkt verbunden wird, so daß zwischen den Verbindungslinien Kammern (4) gebildet werden.

11. Verfahren nach Anspruch 10, **dadurch gekennzeichnet, daß** zwei Gewebebahnen (2, 3) in einem separaten Schritt durch Kettfäden bzw. Kettbändchen und/oder Schußfäden bzw. Schußbändchen verbunden werden.

12. Verfahren nach Anspruch 10, **dadurch gekennzeichnet, daß** zwei Gewebebahnen (2, 3) gleichzeitig gebildet werden und ein oder.mehrere Kettfäden bzw. -bändchen und/oder ein oder mehrere Schußfäden bzw. -bändchen in vordefinierten Abständen den zwei Gewebebahnen (2, 3) gemeinsam eingewoben werden.

13. Verfahren nach einem der Ansprüche 10 bis 12, **dadurch gekennzeichnet, daß** die Fläche der zweiten Gewebebahn (3) gleich oder größer gewählt wird, als die Fläche der ersten Gewebebahn (2).

14. Verfahren nach einem der Ansprüche 10 bis 12 **dadurch gekennzeichnet, daß** jeder Kammer (4) mit Hilfe von zwei getrennten Abwickelstationen der Kette, wobei eine Abwickelvorrichtung in jedem Kammerabstand einen Tänzer und eine Hebeschiene erhält, zusätzliches Material für die die Unterseiten bildende Gewebebahn (3) zur Verfügung gestellt wird, welches Material den Durchhang ermöglicht.

15. Verfahren nach einem der Ansprüche 10 bis 12, **dadurch gekennzeichnet, daß** zur Bildung der zweiten Gewebebahn (3) eine höhere Schußdichte und/oder eine höhere Kettdichte als zur Bildung der ersten Gewebebahn (2) eingesetzt wird.

16. Verfahren nach einem der Ansprüche 10 bis 12, **dadurch gekennzeichnet, daß** zur Bildung der zweiten Gewebebahn (3) breitere Schußfäden bzw. -bändchen und/oder breitere Kettfäden bzw.- bändchen als zur Bildung der ersten Gewebebahn (2) eingesetzt werden.

17. Verfahren nach einem der Ansprüche 10 bis 12, **dadurch gekennzeichnet, daß** die zwei Gewebebahnen (2, 3) aus einem Material mit unterschiedlichem Wärmeschrumpf gewählt sind, wobei nach Bildung der Verbindungen, eine Seite mittels Wärmeeinwirkung geschrumpft wird.

18. Verwendung einer Abschattungs- und/oder Isolierbahn nach einem der Ansprüche 1 bis 10 zur Abschattung und Isolierung von Gewächshäusern, Feldern oder Beeten.
